(19) Europäisches Patentamt / European Patent Office / Office européen des brevets

(11) **EP 3 401 248 B1**

(12) **EUROPÄISCHE PATENTSCHRIFT**

(45) Veröffentlichungstag und Bekanntmachung des Hinweises auf die Patenterteilung:
**05.05.2021 Patentblatt 2021/18**

(51) Int Cl.:
**B65G 53/52** *(2006.01)*

(21) Anmeldenummer: **18160447.1**

(22) Anmeldetag: **07.03.2018**

(54) **VERFAHREN ZUR PNEUMATISCHEN FÖRDERUNG VON KUNSTSTOFFGRANULAT**

METHOD FOR THE PNEUMATIC CONVEYANCE OF PLASTICS GRANULATE

PROCÉDÉ DE TRANSPORT PNEUMATIQUE DE GRANULAT EN MATIÈRE PLASTIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **24.04.2017 DE 102017206842**

(43) Veröffentlichungstag der Anmeldung:
**14.11.2018 Patentblatt 2018/46**

(73) Patentinhaber: **Coperion GmbH**
**70469 Stuttgart (DE)**

(72) Erfinder:
- **Stark, Dr. Bernhard**
  **88273 Fronreute (DE)**
- **Duerr, Michael**
  **88364 Wolfegg (DE)**
- **Vögele, Thomas**
  **88521 Binzwangen (DE)**
- **Dikreuter, Christian**
  **88090 Immenstaad (DE)**
- **Toni, Christian**
  **88214 Ravensburg (DE)**

(74) Vertreter: **Rau, Schneck & Hübner**
**Patentanwälte Rechtsanwälte PartGmbB**
**Königstraße 2**
**90402 Nürnberg (DE)**

(56) Entgegenhaltungen:
EP-A2- 0 990 606    EP-A2- 2 159 526
WO-A1-2011/042429    DE-A1- 4 111 056
DE-A1-102013 223 437    JP-A- 2010 202 792
US-A- 2 350 759    US-B2- 8 591 152

- **Coperion: "APP seminar Advanced Material Handling Solutions", , 8 January 2015 (2015-01-08), XP055641394, Retrieved from the Internet: URL:http://www.coperionktron.com.es/News/Seminars/Plastics/Barcelona/CK.cfm [retrieved on 2019-11-12]**
- **Siegel ET AL: "4.1.3 Grundlagen der Berechnung von pneumatischen Förderanlagen" In: "Pneumatische Förderung Grundlage, Auslegung, Anlagenbau, Betrieb", 1 January 1991 (1991-01-01), Vogel Buchverlag, XP055618364, page 2pp, 8, 83-85, 92,**
- **Segler ET AL: "Pneumatische Fördersysteme und Beitrag zur Berechnung der Flugförderung", Grundl. Landtechnik, vol. 29, no. 1, 1 January 1979 (1979-01-01), pages 13-19, XP055618352,**
- **HILGRAF P: "PNEUMATISCHE FOERDERUNG. \EIN UEBERBLICK, TEIL 1", ZKG INTERNATIONAL - ZEMENT - KALK - GIPS INTERNATIONAL, BAUVERLAG BV GMBH, DE, vol. 46, no. 1, 1 January 1993 (1993-01-01), pages 25-29, XP000358413, ISSN: 0949-0205**
- **R D Marcus ET AL: "Principles of pneumatic conveying" In: "Pneumatic Conveying of solids", 1 January 1990 (1990-01-01), XP055729797, ISBN: 978-94-010-6669-3 DOI: 10.1007/978-94-009-0405-7,**

**Beschreibung**

Die Erfindung betrifft ein Verfahren zur pneumatischen Förderung von Kunststoffgranulat.

Ein Verfahren zur pneumatischen Förderung von Kunststoffgranulat ist aus DE 198 40 502 C1 bekannt Die DE 198 40 502 C1 offenbart den Oberbegriff des Anspruchs 1.

Weitere Verfahren sind bekannt aus DE 41 11 056 A1, US 8,591,152 B2, WO 2011/042 429 A1, JP 2010-202 792 A, US 2,350,759 A und EP 2 159 526 A2.

Coperion: "APP Seminar Advanced Material Handling Solutions, 08.01.2015 offenbart ein Verfahren zur pneumatischen Förderung von Schüttgut.

Siegel et al.: "Pneumatische Förderung - Grundlagen, Auslegung, Anlagenbau, Betrieb", 1. Auflage, Vogel Verlag und Druck KG, 1991, Segler, G. et al.: "Pneumatische Fördersysteme und Beitrag zur Berechnung der Flugförderung", Grundlagen Landtechnik, Band 29, Nr. 1, 1979, Seiten 13 bis 19, sowie Hillgraf, P.: "Pneumatische Förderung - Ein Überblick, Teil 1", ZKG International, Band 46, Nr. 1, 1993, Seiten 25 bis 28 offenbaren allgemeine Grundlagen zur pneumatischen Förderung.

Es ist eine Aufgabe der vorliegenden Erfindung, das Förderverhalten des Kunststoffgranulats bei der pneumatischen Förderung zu verbessern. Diese Aufgabe ist erfindungsgemäß gelöst durch ein Verfahren mit den im Anspruch 1 angegebenen Merkmalen.

Erfindungsgemäß wurde erkannt, dass das Förderverhalten von Kunststoffgranulat verbessert ist, wenn die Froude-Zahl an jeder Stelle entlang einer Förderleitung von einem Aufgabeort zu einem Zielort kleiner ist als 45. Die Froude-Zahl ist definiert als

$$Fr = \frac{v}{\sqrt{D \cdot g}}$$

wobei v die Leerrohrgeschwindigkeit von trockenem Fördergas in der Förderleitung bei einer Betriebstemperatur und einem Betriebsdruck, D der Innendurchmesser der Förderleitung und g die Erdbeschleunigung sind. Das trockene Fördergas ist entlang der Förderleitung massekonstant, also eindeutig definiert. Die Froude-Zahl kann für jede Stelle entlang der Förderleitung eindeutig bestimmt werden. Überraschend wurde gefunden, dass bei einer Froude-Zahl, die kleiner ist als 45, das Produkt, also das Kunststoffgranulat, zuverlässig und sicher vom Aufgabeort zum Zielort transportiert werden kann. Zudem ist bei einer Froude-Zahl von kleiner 45 eine produktschonende und energiereduzierte Förderung möglich. Es wurde gefunden, dass eine energieaufwändige Förderung mit hohen Förderluftgeschwindigkeiten, also mit hohen Froude-Zahlen, die unkompliziert realisierbar wäre, nicht erforderlich ist. Eine zusätzliche Reduzierung des Energieaufwands ergibt sich bei einer Froude-Zahl, die kleiner ist als 40, und insbesondere bei einer Froude-Zahl, die kleiner ist als 35. Zusätzlich ergibt sich eine weitere Produktschonung. Eine nach diesem Verfahren betriebene Anlage kann kleiner ausgelegt werden. Der Realisierungsaufwand ist reduziert. Die Investitionskosten und Betriebskosten sind für eine derartige Anlage reduziert. Das Verfahren kann besonders wirtschaftlich durchgeführt werden. Zur pneumatischen Förderung wird das Kunststoffgranulat an dem Aufgabeort der Förderleitung unter Zugabe einer Flüssigkeit aufgegeben. Dem Kunststoffgranulat und/oder dem Fördergas wird eine solche Menge der Flüssigkeit zugegeben, dass das Fördergas während der Förderung zumindest bereichsweise in der Förderleitung mit der Flüssigkeit übersättigt ist. Das bedeutet, dass die relative Feuchte des Fördergases zumindest bereichsweise in der Förderleitung größer ist als 100 %. Die relative Feuchte ist definiert als das Verhältnis der Masse des im Fördergas enthaltenen Dampfes der Flüssigkeit zur größtmöglichen Masse an Dampf dieser Flüssigkeit, die das Fördergas unter den gegebenen Bedingungen wie Druck und Temperatur aufnehmen kann. Bei einer relativen Feuchte von genau 100 % liegt eine vollständige Sättigung des Fördergases mit Flüssigkeit vor. Eine weitere Zugabe von Flüssigkeit führt zu einer Übersättigung des Fördergases. Die Zugabe der Flüssigkeit zu dem Fördergas kann an einer oder mehreren Stellen einer Förderanlage vor und/oder nach dem Aufgabeort entlang der Förderrichtung des Produkts erfolgen. Die Zugabe der Flüssigkeit erfolgt insbesondere mittels einer Befeuchtungseinheit, um das Fördergas und/oder das Kunststoffgranulat gezielt zu befeuchten. Die Befeuchtungseinheit kann dadurch gebildet sein, dass feuchtes Kunststoffgranulat dem Fördergas zugegeben wird, das beispielsweise einen Feuchtegehalt von bis zu 0,5 %, also 5000 ppm, aufweist. Eine Flüssigkeitszufuhr aus einem separaten Flüssigkeitsanschluss kann dadurch entbehrlich sein. Als feuchtes Kunststoffgranulat kann Polyolefin-Granulat dienen, das beispielsweise nach einer Unterwasser-Granulierung nicht oder lediglich unvollständig getrocknet worden ist wie beispielsweise mittels mechanischer Entwässerung. Das erfindungsgemäße Verfahren eignet sich sowohl für die Flugförderung als auch für die Langsamförderung von Kunststoffgranulat.

Das Kunststoffgranulat weist einen äquivalenten Teilchendurchmesser von 2 mm bis 5 mm einer volumengleichen Kugel auf.

Ein unvollständiges Verdampfen der zugegebenen Flüssigkeit bei ihrer Zugabe ermöglicht, dass das Fördergas entlang der Förderleitung mit reduziertem Aufwand übersättigt werden kann. Insbesondere sind weitere Befeuchtungseinheiten nicht zwingend erforderlich. Der unverdampfte Anteil der Flüssigkeit verdampft bei der Förderung entlang der Förderleitung weiter.

Eine erfindungsgemäße Beladung, die größer ist als 3, ermöglicht einen vorteilhaften Produktdurchsatz. Als Beladung wird das Verhältnis des Produktmassenstroms zu dem Massestrom des trockenen Fördergases in der Förderleitung definiert. Besonders vorteilhaft ist es, wenn die Beladung größer ist als 5 und insbesondere größer ist als 7.

Der Massestrom des trockenen Fördergases kann bei einer Luftversorgung, also der Verwendung von Luft als Fördergas, über einen der Förderung zugeordneten Drucklufterzeuger bestimmt werden, indem eine feuchte Gesamtgasmenge anhand des Betriebspunktes des Drucklufterzeugers bestimmt wird. Alternativ ist eine saugseitige oder druckseitige Luftmengenmessung möglich. Die feuchte Gesamtgasmenge kann dann aus Druck und Temperatur an der gewählten Messstelle berechnet werden. Mit dem Flüssigkeitsgehalt des Gases im Ansaugzustand, also bei den Bedingungen an der Ansaugstelle vor dem Drucklufterzeuger, als Masse des Wassers sowie Masse des trockenen Gases, also trockener Luft, kann daraus der Massestrom des trockenen Gases, also der trockenen Luft, berechnet werden. Alternativ kann der Massestrom des trockenen Fördergases bei einer Fördergasversorgung über ein Drucknetz und die Einstellung der Gasmenge über eine Gasmengenregeleinheit, insbesondere eine Laval-Düse mit einem Vordruckregler analog der Bestimmung bei einer Luftversorgung erfolgen, wobei ein Unterschied darin besteht, dass die feuchte Gesamtgasmenge nicht aus dem Betriebspunkt des Druckgaserzeugers, sondern aus Einstellwerten der Gasmengenregeleinheit entnommen wird. Die Bestimmung des Flüssigkeitsgehalts erfolgt in dem vorgelagerten Drucknetz oder nach der Gasmengenregeleinheit und insbesondere nicht im Ansaugzustand.

Der Massenstrom des trockenen Fördergases kann aus dem wie vorstehend beschrieben ermittelten Gesamtvolumenstrom der feuchten Gesamtgasmenge bestimmt werden, indem eventuell vorhandene Leckagen wie beispielsweise an einer Zellenradschleuse berücksichtigt, also abgezogen werden, um den feuchten Fördergasstrom zu erhalten.

Wasser als Flüssigkeit gemäß Anspruch 2 vereinfacht zusätzlich das Verfahren. Insbesondere ermöglicht die Verwendung von demineralisiertem Wasser die Reduktion von Beeinträchtigungen des Verfahrens und/oder des Produkts.

Ein Förderdruck gemäß Anspruch 3 gewährleistet eine zuverlässige und energieoptimierte Förderung des Kunststoffgranulats. Der Förderdruck entspricht einer Druckdifferenz eines Aufgabeort-Drucks und eines Zielort-Drucks. Die Druckdifferenz beträgt mindestens 0,2 bar, insbesondere mindestens 0,3 bar, insbesondere mindestens 0,4 bar, insbesondere mindestens 0,6 bar und insbesondere mindestens 0,8 bar.

Eine Druckförderung gemäß Anspruch 4 kann vorteilhaft und insbesondere unaufwändig realisiert werden. Am Aufgabeort herrscht ein Überdruck von mindestens 0,2 barg, insbesondere mindestens 0,3 barg, insbesondere mindestens 0,4 barg, insbesondere mindestens 0,6 barg und insbesondere mindestens 0,8 barg. Der Förderdruck ergibt sich insbesondere aus den spezifischen Produkteigenschaften des Kunststoffgranulats, der Fördergasgeschwindigkeit, der Förderleistung und/oder der Isometrie der Förderleitung.

Eine Saugförderung gemäß Anspruch 5 ermöglicht eine analoge Druckdifferenz wie bei der Druckförderung. Bei der Saugförderung wird am Zielort ein Unterdruck gegenüber der Umgebung von mindestens 0,2 barg, insbesondere mindestens 0,3 barg und insbesondere mindestens 0,4 barg, insbesondere mindestens 0,6 barg und insbesondere mindestens 0,8 barg erzeugt.

Ein Feuchtegehalt gemäß Anspruch 6 gewährleistet, dass das Kunststoffgranulat nach der pneumatischen Förderung am Zielort nicht eine unbeabsichtigt große Menge an Flüssigkeit aufweist. Als Feuchtegehalt ist das Verhältnis der Masse der zugegebenen Flüssigkeit zu der Masse des Kunststoffgranulats definiert. Der Feuchtegehalt beträgt höchstens 10 %, insbesondere höchstens 5 %, insbesondere höchstens 2,5 %, insbesondere höchstens 1,5 % und insbesondere höchstens 0,5 %. Ein Feuchtegehalt von mehr als 2,5 % ist insbesondere vorteilhaft bei der Förderung von HDPE-Granulat und/oder PP-Granulat, wobei die Temperatur des Granulats insbesondere mindestens 60 °C, insbesondere mindestens 70 °C, insbesondere mindestens 80 °C beträgt.

Die Verwendung von Luft als Fördergas gemäß Anspruch 7 ermöglicht eine unkomplizierte Realisierung des Verfahrens. Alternativ kann als Fördergas auch Stickstoff eingesetzt werden.

Eine relative Feuchte des Fördergases gemäß Anspruch 8 gewährleistet vorteilhafte Förderbedingungen entlang der Förderleitung. Insbesondere ist gewährleistet, dass zumindest bereichsweise eine Übersättigung des Fördergases entlang der Förderleitung vorliegt. Vorteilhaft ist es, wenn die relative Feuchte des Fördergases am Zielort zwischen 80 % und 150 % und insbesondere zwischen 90 % und 100 % beträgt. Besonders vorteilhaft ist es, wenn das Fördergas am Zielort maximal vollständig gesättigt ist, so dass der Aufwand für die Abtrennung feuchter Förderluft reduziert ist.

Die Zugabe von Flüssigkeit gemäß Anspruch 9 ermöglicht eine gezielte und insbesondere entlang der Förderleitung punktuelle, Befeuchtung des Fördergases.

Ein Ausführungsbeispiel der Erfindung wird nachfolgend anhand der Zeichnung näher erläutert. In dieser zeigen:

Fig. 1     eine schematische Darstellung einer Anlage zur Durchführung des erfindungsgemäßen Verfahrens,

Fig. 2     eine vergrößerte Detaildarstellung des Details II in Fig. 1,

Fig. 3     eine schematische Darstellung eines Zustandsdiagramms bei Flugförderung.

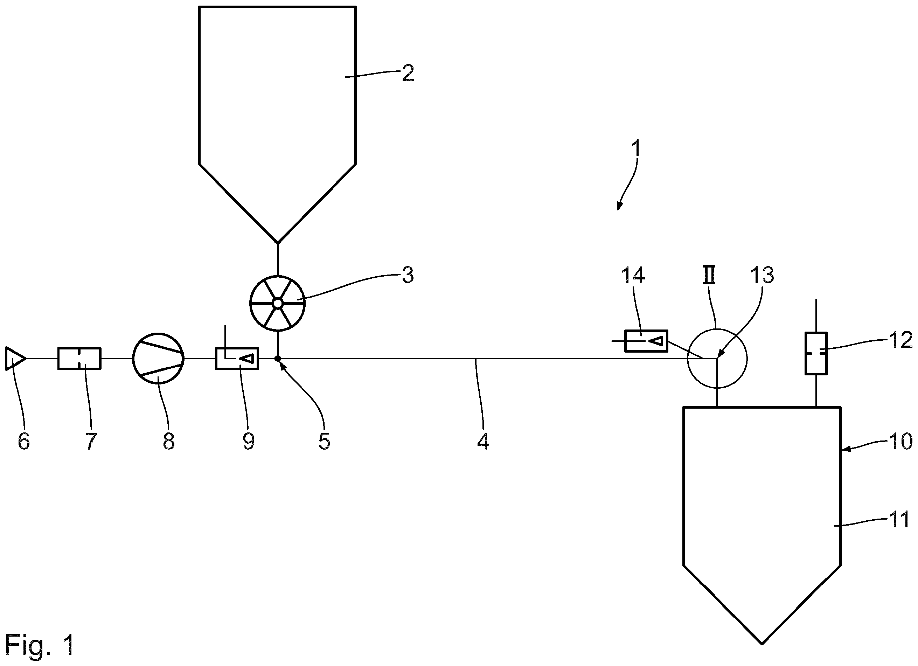

Eine in Fig. 1 als Ganzes mit 1 dargestellte Anlage dient zur pneumatischen Förderung von Kunststoffgranulat, die für Langsamförderung und für Flugförderung geeignet ist.

Das Kunststoffgranulat ist in einem Behälter 2 bevorratet und wird mittels einer Aufgabe-Dosiereinheit 3 in Form einer Zellenradschleuse einer Förderleitung 4 an einem Aufgabeort 5 zugegeben. Es können auch mehrere Behälter 2 vorgesehen sein, die jeweils mittels einer separaten Aufgabe-Dosiereinheit 3 an die Förderleitung 4 angeschlossen sind. Das Kunststoffgranulat kann auch vordosiert aus einem vorgelagerten Prozess beispielsweise in einer Granuliereinrichtung nach einem Extruder anfallen.

An dem Aufgabeort 5 wird das der Förderleitung 4 zugeführte Kunststoffgranulat mit Fördergas in Form von Förderluft beaufschlagt. Die Förderluft wird aus einer Druckluftquelle 6 durch einen Filter 7 und einen Verdichter 8 bereitgestellt. Die Förderluft wird mit Überdruck von mindestens 0,4 barg gegenüber der Umgebung am Aufgabeort 5 bereitgestellt. Die Anlage 1 ermöglicht eine Druckförderung.

Gemäß dem gezeigten Ausführungsbeispiel ist stromaufseitig des Aufgabeorts 5 eine Befeuchtungseinheit 9 angeordnet, um der Förderluft Flüssigkeit zuzuführen. Die Flüssigkeit ist Wasser. Durch die Flüssigkeitszugabe wird das Fördergas befeuchtet und dient als feuchtes Fördergas zur Förderung des Kunststoffgranulats entlang der Förderleitung 4. Die Förderleitung 4 verbindet den Aufgabeort 5 mit einem Zielort 10, der gemäß dem gezeigten Ausführungsbeispiel einen Empfangsbehälter 11 aufweist. Der Empfangsbehälter 11 ist ein Lagersilo. An dem Empfangsbehälter 11 ist insbesondere an einer oberen Stirnseite ein Abluftfilter 12 vorgesehen, um eine Abgabe von Abluft an die Umgebung zu ermöglichen. Am Zielort 10 können auch mehrere Empfangsbehälter 11, die insbesondere unterschiedlich ausgeführt sein können, angeordnet sein.

Die Förderleitung 4 kann sequentiell und/oder verzweigt ausgeführt sein, so dass beispielsweise mehrere Förderleitungsabschnitte parallel und/oder in Reihe zueinander angeordnet und miteinander verbunden sind. Eine aus mehreren Förderleitungsabschnitten gebildete Förderleitung dient insbesondere zur Verbindung von einem oder mehreren Behältern 2 mit einem oder mehreren Empfangsbehältern 11.

Entlang der Förderleitung 4 ist gemäß dem gezeigten Ausführungsbeispiel ein Rohrbogen 13 angeordnet, der eine Umlenkung der Förderströmung, die aus dem Kunststoffgranulat und dem Fördergas gebildet ist, ermöglicht. Gemäß dem gezeigten Ausführungsbeispiel ermöglicht der Rohrbogen 13 eine 90°-Umlenkung. Es sind auch andere Umlenkwinkel, insbesondere in einem Bereich zwischen 0° und 180°, möglich. Eine Umlenkung des Förderstroms ist beispielsweise auch mittels einer Weiche möglich.

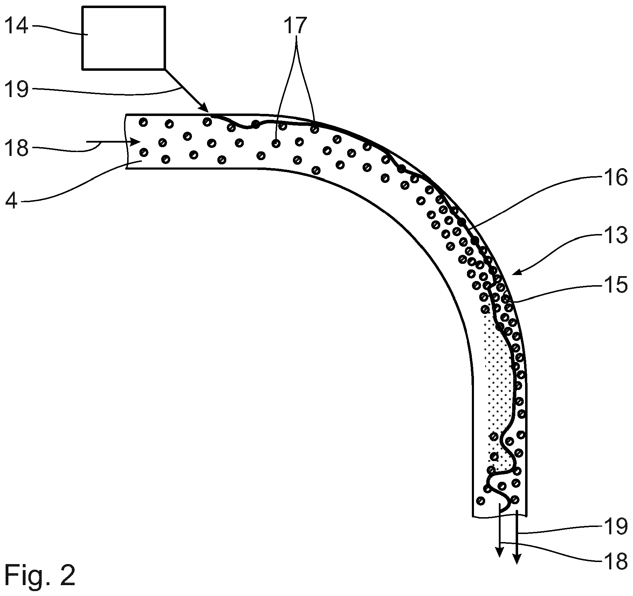

Im Bereich des Rohrbogens 13, insbesondere stromaufwärts des Rohrbogens 13, ist eine weitere Befeuchtungseinheit 14 angeordnet, die nachfolgend anhand von Fig. 2 näher erläutert wird. Vorteilhaft ist es, wenn entlang der Förderleitung 4 mehrere Befeuchtungseinheiten 9, 14 angeordnet sind, insbesondere mehr als zwei Befeuchtungseinheiten. Dadurch gelingt es, an mehreren Stellen, insbesondere bedarfsangepasst und insbesondere geregelt, Flüssigkeit zuzugeben. Dadurch kann die Übersättigung der feuchten Förderluft insgesamt reduziert werden. Der Aufwand für die Abtrennung von Feuchtigkeit und/oder Flüssigkeit am Zielort 10 kann dadurch reduziert werden. Bei hohen Fördergeschwindigkeiten, die insbesondere bei der Flugförderung auftreten, wirken bei der Umlenkung des Förderstroms in dem Rohrbogen 13 aufgrund der Fliehkräfte hohe Reibkräfte auf die Partikel des Kunststoffgranulats 17. In Folge der Reibung und/oder dem Kontakt des Kunststoffgranulats 17 mit der außenliegenden Rohrwandung 15 der Förderleitung 4 im Bereich des Rohrbogens 13 tritt eine erhöhte Wandtemperatur auf, woraus eine erhöhte Staub- und Engelhaar-Bildung folgt. Um dem entgegenzuwirken, dient die weitere Befeuchtungseinheit 14 zur Zugabe von Flüssigkeit in Form von Wasser stromaufwärts des Rohrbogens 13. Das Wasser bildet einen Gleitfilm 16 entlang der Innenfläche der Außenwandung 15. Durch den Gleitfilm 16 wird die Reibung an der Außenwandung 15 reduziert. Der Betrag der Wiederbeschleunigung ist reduziert. Der Abrieb des Kunststoffgranulats 17 ist reduziert.

Zusätzlich bewirkt eine Verdunstung des zugeführten Wassers zu einer Kühlung der Oberflächen des Kunststoffgranulats 17 und der Innenwand der Förderleitung 4 im Bereich des Rohrbogens 13. Auch dadurch wird der Abrieb reduziert. Der sich bildende Wasserdampf unterstützt die Wiederbeschleunigung des Kunststoffgranulats 17 und insbesondere die Förderung mit feuchtem Fördergas 18. Die Strömungsrichtung 18 des Fördergases entspricht auch der Förderrichtung des Kunststoffgranulats 17. Die Fließrichtung des Wassers ist durch den Strömungspfeil 19 gekennzeichnet.

Nachfolgend wird unter Bezugnahme auf Fig. 1 bis 3 ein Verfahren zur Förderung von Kunststoffgranulat näher erläutert. Kunststoffgranulat wird aus dem Behälter 2 mittels der Aufgabe-Dosiereinheit 3 am Aufgabeort 5 der Förderleitung 4 zugegeben und mittels Fördergas in Form von Förderluft beaufschlagt. Der Förderluft wird mittels der Befeuchtungseinheit 9 Wasser zugegeben. Das Fördergas wird dadurch befeuchtet. Entlang der Förderleitung 4 wird das Kunststoffgranulat mittels der feuchten Förderluft gefördert. Dadurch, dass die Flüssigkeit bei ihrer Zugabe nur unvollständig verdampft, kann entlang der Förderleitung 4 eine weitere Verdampfung der Flüssigkeit erfolgen, so dass die Förderluft entlang der Förderleitung 4 zumindest bereichsweise übersättigt ist, also eine relative Feuchte von mehr als 100 % aufweist.

Erfindungsgemäß wurde gefunden, dass bei der Anlage 1 eine pneumatische Förderung erfolgen kann, wobei die Froude-Zahl an jeder Stelle entlang der Förderleitung 4 kleiner ist als 45, die Beladung größer ist als 3 und der Feuchtegehalt des Kunststoffgranulats höchstens 2,5 % beträgt. Die relative Feuchte des Fördergases am Zielort 10 beträgt gemäß dem gezeigten Ausführungsbeispiel zwischen 90 % und 100 %.

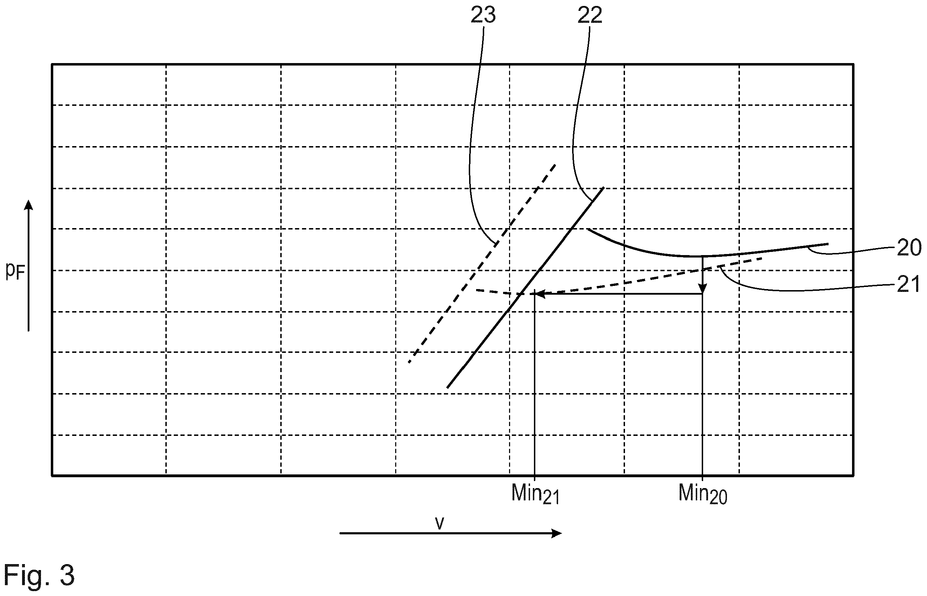

Überraschend wurde gefunden, dass es möglich ist, bei einem Verfahren zur Förderung des Kunststoffgranulats die Fördergasmenge zu senken, wenn die Betriebsparameter, insbesondere die Froude-Zahl, die Beladung, der Förderdruck und/oder der Feuchtegehalt geeignet gewählt sind. Dies ergibt sich anschaulich am Beispiel einer Flugförderung aus dem Zustandsdiagramm gemäß Fig. 3. Dort ist in durchgezogener Linie die Abhängigkeit des Förderdrucks $p_F$ von der Endgeschwindigkeit v bei konstanter Förderleistung dargestellt. Die Kurve 20 ist an ihrem linken Ende durch die sogenannte Stopfgrenze 22 beschränkt. Wird bei konstanter Förderleistung die Förderluftmenge und damit die Endgeschwindigkeit v weiter reduziert, führt dies zu einer Verstopfung der Förderleitung. Der Kurvenverlauf 20 rechts der Stopfgrenze 22, beispielhaft für eine Förderleistung dargestellt, folgt einem gekrümmten Verlauf mit einem Förderdruck-Minimum $Min_{20}$. Der gekrümmte Kurvenabschnitt 20 wird auch als Zustandskurve bezeichnet.

Das Minimum $Min_{20}$ der Kurve 20 definiert einen sogenannten Betriebspunkt im energetischen Optimum, also bei reduziertem, minimalem Energieaufwand für die Förderung.

Gestrichelt dargestellt in Fig. 3 ist eine weitere Zustandskurve 21 einer pneumatischen Förderung gemäß dem erfindungsgemäßen Verfahren. Überraschend wurde nun gefunden, dass bei der Durchführung des erfindungsgemäßen Verfahrens es gelingt, die Zustandskurve 21 für das erfindungsgemäße Verfahren in dem Diagramm nach links, also hin zu reduzierten Endgeschwindigkeiten zu verschieben. Das bedeutet, dass die Stopfgrenze 23 und das Druckverlustminimum $Min_{21}$, also der Betriebspunkt, bei dem erfindungsgemäßen Verfahren, zu reduzierten Endgeschwindigkeiten verschoben sind. Es gilt: $Min_{21} < Min_{20}$. Das erfindungsgemäße Verfahren ist besonders wirtschaftlich durchführbar.

## Patentansprüche

1. Verfahren zur pneumatischen Förderung von Kunststoffgranulat, das mittels eines Fördergases unter Zugabe einer Flüssigkeit durch eine Förderleitung (4) von einem Aufgabeort (5) zu einem Zielort (10) gefördert wird, wobei dem Kunststoffgranulat und/oder dem Fördergas eine solche Menge der Flüssigkeit zugegeben wird, dass das Fördergas während der Förderung zumindest bereichsweise in der Förderleitung (4) mit der Flüssigkeit übersättigt ist, wobei die zugegebene Flüssigkeit bei ihrer Zugabe nur unvollständig verdampft, wobei der unverdampfte Anteil der Flüssigkeit bei der Förderung entlang der Förderleitung (4) weiter verdampft, **dadurch gekennzeichnet, dass**

- eine die Förderbedingungen in der Förderleitung (4) definierende Froude-Zahl an jeder Stelle entlang der Förderleitung kleiner ist als 45,
- das Kunststoffgranulat einen äquivalenten Teilchendurchmesser von 2 mm bis 5 mm einer volumengleichen Kugel aufweist,
- das Verhältnis von Produktmassestrom zu dem Massestrom von trockenem Fördergas in der Förderleitung (4) größer ist als 3.

2. Verfahren gemäß Anspruch 1, **dadurch gekennzeichnet, dass** als Flüssigkeit Wasser, insbesondere demineralisiertes Wasser, verwendet wird.

3. Verfahren gemäß einem der vorstehenden Ansprüche, **gekennzeichnet durch** einen Förderdruck ($p_F$) zur pneumatischen Förderung des Kunststoffgranulats entlang der Förderleitung (4), wobei der Förderdruck ($p_F$) der Druckdifferenz eines Aufgabeort-Drucks ($p_A$) und eines Zielort-Drucks (pz) entspricht, wobei die Druckdifferenz mindestens 0,2 bar, insbesondere mindestens 0,3 bar, insbesondere mindestens 0,4 bar beträgt.

4. Verfahren gemäß Anspruch 3, **gekennzeichnet durch** eine Druckförderung, wobei am Aufgabeort (5) ein Überdruck gegenüber der Umgebung von mindestens 0,2 barg, insbesondere mindestens 0,3 barg, insbesondere mindestens 0,4 barg vorliegt.

5. Verfahren gemäß Anspruch 3, **gekennzeichnet durch** eine Saugförderung, wobei am Zielort (10) ein Unterdruck gegenüber der Umgebung von mindestens 0,2 barg, insbesondere mindestens 0,3 barg, insbesondere mindestens 0,4 barg vorliegt.

6. Verfahren gemäß einem der vorstehenden Ansprüche, **gekennzeichnet durch** einen Feuchtegehalt (x) des Kunststoffgranulats von höchstens 10 %, insbesondere von höchstens 5 %, insbesondere von höchstens 2,5%, wobei der Feuchtegehalt (x) definiert ist als das Verhältnis der Masse ($m_F$) der zugegebenen Flüssigkeit zu der Masse ($m_G$) des Kunststoffgranulats.

7. Verfahren gemäß einem der vorstehenden Ansprüche, **dadurch gekennzeichnet, dass** als Fördergas Luft oder Stickstoff verwendet wird.

8. Verfahren gemäß einem der vorstehenden Ansprüche, **dadurch gekennzeichnet, dass** die relative Feuchte des Fördergases am Zielort (10) zwischen 60 % und 200 % beträgt.

9. Verfahren gemäß einem der vorstehenden Ansprüche, **gekennzeichnet, durch** Zugabe von Flüssigkeit an mindestens einem Befeuchtungsort, der entlang der Förderleitung (4) zwischen dem Aufgabeort (5) und dem Zielort (10) angeordnet ist, wobei der Befeuchtungsort insbesondere im Bereich eines Rohrbogens (13), insbesondere stromaufwärts des Rohrbogens (13), angeordnet ist.

## Claims

1. Method for pneumatically conveying plastic pellets which are conveyed, by means of a carrier gas, through a conveyor line (4) from a feed point (5) to a destination (10) with a liquid being added thereto, wherein the quantity of liquid added to the plastic pellets and/or the carrier gas is such that during conveying, the carrier gas is oversaturated with the liquid at least in sections of the conveyor line (4), wherein the liquid added evaporates only incompletely when being added, wherein the non-evaporated part of the liquid will continue to evaporate when being conveyed along the conveyor line (4), **characterized in that**

   - a Froude number defining the conveying conditions in the conveyor line (4) is smaller than 45 at any point along the conveyor line (4),
   - the plastic pellets have a particle diameter of 2 mm to 5mm, which is in particular equivalent to that of a sphere having the same volume,
   - the ratio of the product mass flow to the mass flow of dry carrier gas in the conveyor line (4) is greater than 3.

2. Method according to claim 1, **characterized in that** the liquid used is water, in particular demineralized water.

3. Method according to any one of the preceding claims, **characterized by** a feed pressure ($p_F$) for pneumatically conveying the plastic pellets along the conveyor line (4), wherein the feed pressure ($p_F$) corresponds to the pressure difference between a feed point pressure ($p_A$) and a destination pressure (pz), said pressure difference amounting to at least 0.2 bar, in particular at least 0.3 bar, in particular at least 0.4 bar.

4. Method according to claim 3, **characterized by** a pressure conveying, wherein there is an overpressure relative to atmospheric pressure of at least 0.2 barg, in particular at least 0.3 barg, in particular at least 0.4 barg at the feed point (5).

5. Method according to claim 3, **characterized by** a suction conveying, wherein there is a negative pressure relative to atmospheric pressure of at least 0.2 barg, in particular at least 0.3 barg, in particular at least 0.4 barg at the destination (10).

6. Method according to any one of the preceding claims, **characterized by** a humidity content (x) of the plastic pellets of at most 10%, in particular of at most 5%, in particular of at most 2.5%, wherein the humidity content (x) is defined as the ratio of the mass ($m_F$) of the liquid added in relation to the mass ($m_G$) of the plastic pellets.

7. Method according to any one of the preceding claims, **characterized in that** the carrier gas used is air or nitrogen.

8. Method according to any one of the preceding claims, **characterized in that** the relative humidity of the carrier gas at the destination (10) is between 60% and 200%.

9. Method according to any one of the preceding claims, **characterized by** an addition of liquid via at least one humidification point arranged along the conveyor line (4) between the feed point (5) and the destination (10), wherein the humidification point is in particular arranged in the region of a pipe bend (13), in particular upstream of the pipe bend (13).

## Revendications

1. Procédé de transport pneumatique d'un granulé en matière plastique, qui est transporté au moyen d'un gaz de transport sous addition d'un liquide au travers d'une conduite de transport (4) depuis un point d'alimentation (5) jusqu'à un point de destination (10), dans lequel on ajoute au granulé en matière plastique et/ou au gaz de transport une quantité de liquide telle que le gaz de transport est sursaturé en liquide au moins par sections dans la conduite de transport (4) pendant le transport, dans lequel le liquide ajouté ne s'évapore qu'incomplètement pendant son addition, dans lequel la partie non évaporée du liquide continue à s'évaporer pendant le transport le long de la conduite de transport (4), **caractérisé en ce**

   - **qu'**un nombre de Froude définissant les conditions de transport dans la conduite de transport (4) est inférieur à 45 en tout endroit de la conduite de transport,
   - **que** le granulé en matière plastique a un diamètre de particule équivalent de 2 mm à 5 mm d'une sphère de même volume,
   - **que** le rapport entre le débit massique du produit et le débit massique du gaz de transport sec dans la conduite de transport (4) est supérieur à 3.

**2.** Procédé selon la revendication 1, **caractérisé en ce que** de l'eau, en particulier de l'eau déminéralisée, est utilisée comme liquide.

**3.** Procédé selon l'une quelconque des revendications précédentes, **caractérisé par** une pression de transport ($p_F$) pour le transport pneumatique du granulé en matière plastique le long de la conduite de transport (4), la pression de transport ($p_F$) correspondant à la différence de pression entre une pression au point d'alimentation ($p_A$) et une pression au point de destination (pz), la différence de pression étant d'au moins 0,2 bar, en particulier d'au moins 0,3 bar, en particulier d'au moins 0,4 bar.

**4.** Procédé selon la revendication 3, **caractérisé par** un transport par pression, dans lequel une surpression par rapport à l'environnement d'au moins 0,2 barg, en particulier d'au moins 0,3 barg, en particulier d'au moins 0,4 barg est présente au point d'alimentation (5).

**5.** Procédé selon la revendication 3, **caractérisé par** un transport par aspiration, dans lequel une dépression par rapport à l'environnement d'au moins 0,2 barg, en particulier d'au moins 0,3 barg, en particulier d'au moins 0,4 barg est présente au point de destination (10).

**6.** Procédé selon l'une quelconque des revendications précédentes, **caractérisé par** une teneur en humidité (x) du granulé en matière plastique d'au plus 10%, en particulier d'au plus 5%, en particulier d'au plus 2,5%, la teneur en humidité (x) étant définie comme le rapport de la masse ($m_F$) du liquide ajouté à la masse ($m_G$) du granulé en matière plastique.

**7.** Procédé selon l'une quelconque des revendications précédentes, **caractérisé en ce que** l'on utilise de l'air ou de l'azote comme gaz de transport.

**8.** Procédé selon l'une quelconque des revendications précédentes, **caractérisé en ce que** l'humidité relative du gaz de transport au point de destination (10) est comprise entre 60% et 200%.

**9.** Procédé selon l'une quelconque des revendications précédentes, **caractérisé par** une addition de liquide à au moins un endroit d'humidification disposé le long de la conduite de transport (4) entre le point d'alimentation (5) et le point de destination (10), l'endroit d'humidification étant disposé en particulier dans la région d'un coude de conduite (13), en particulier en amont du coude de conduite (13).

Fig. 1

14

17

19

18

4

16

13

15

19

18

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19840502 C1
- DE 4111056 A1
- US 8591152 B2
- WO 2011042429 A1
- JP 2010202792 A
- US 2350759 A
- EP 2159526 A2

**In der Beschreibung aufgeführte Nicht-Patentliteratur**

- APP Seminar Advanced Material Handling Solutions. Coperion, 08. Januar 2015
- **SIEGEL et al.** Pneumatische Förderung - Grundlagen, Auslegung, Anlagenbau, Betrieb. Vogel Verlag und Druck KG, 1991
- **SEGLER, G. et al.** Pneumatische Fördersysteme und Beitrag zur Berechnung der Flugförderung. *Grundlagen Landtechnik,* 1979, vol. 29 (1), 13-19
- **HILLGRAF, P.** Pneumatische Förderung - Ein Überblick, Teil 1. *ZKG International,* 1993, vol. 46 (1), 25-28